Europäisches Patentamt

European Patent Office

Office européen des brevets

(11) Veröffentlichungsnummer: **0 232 505**
**A1**

## (12) EUROPÄISCHE PATENTANMELDUNG

(21) Anmeldenummer: 86117074.4

(22) Anmeldetag: 08.12.86

(51) Int. Cl.⁴: **G11B 5/00** , G11B 5/31 ,
G11B 5/09

(30) Priorität: 20.12.85 DE 3545361
07.02.86 DE 3603903

(43) Veröffentlichungstag der Anmeldung:
19.08.87 Patentblatt 87/34

(84) Benannte Vertragsstaaten:
DE FR GB IT

(71) Anmelder: **Siemens Aktiengesellschaft Berlin
und München
Wittelsbacherplatz 2
D-8000 München 2(DE)**

(72) Erfinder: **Schewe, Herbert, Dr. Dipl.-Phys.
Haydnstrasse 58
D-8522 Herzogenaurach(DE)**

(54) **Magnetische Speichereinrichtung mit einem senkrecht zu magnetisierenden Aufzeichnungsmedium.**

(57) Die magnetische Speichereinrichtung weist einen Dünnfilm-Magnetkopf sowie ein Aufzeichnungsmedium auf, das mit einer senkrecht (vertikal) zu magnetisierenden Speicherschicht versehen ist. Der Magnetkopf enthält zwei Magnetschenkel mit jeweils mindestens einer Magnetschicht, deren Magnetpole unter Ausbildung eines Spaltes hintereinander angeordnet sind. Mit diesem Magnetkopf soll eine Schreib-und Lesefunktion mit jeweils hohem Wirkungsgrad ermöglicht sein. Hierzu ist erfindungsgemäß vorgesehen, daß die mindestens eine Magnetschicht (10a) des nachlaufenden Magnetschenkels (10) zumindest in ihrem Endbereich (12, 12', 12") hinsichtlich ihres magnetischen Verhaltens (magnetischer Widerstand $R_{M2}$; Sättigungsmagnetisierung $Ms_2$) verschieden ist gegenüber der mindestens einen Magnetschicht (9a) des vorlaufenden Magnetschenkels (9) zumindest in deren Endbereich (11) und daß die Koerzitivfeldstärke ($H_c$) des Materials der Speicherschicht (6) des Aufzeichnungsmediums (A) hinreichend hoch gewählt ist, so daß ein Überschreiben der Speicherschicht (6) des Aufzeichnungsmediums (A) mit dem nachlaufenden Magnetschenkel (10) zumindest weitgehend ausgeschlossen ist.

FIG 1

## Magnetische Speichereinrichtung mit einem senkrecht zu magnetisierenden Aufzeichnungsmedium

Die Erfindung bezieht sich auf eine magnetische Speichereinrichtung mit einem auf einem nicht-magnetischen Substrat schichtweise aufgebauten Dünnfilm-Magnetkopf und mit einem Aufzeichnungsmedium, das mit einer magnetisierbaren Speicherschicht aus einem Material vorbestimmter Koerzitivfeldstärke versehen ist, in welche längs einer Spur Informationen durch senkrechte - (vertikale) Magnetisierung dieser Schicht einzuschreiben sind, wobei der Magnetkopf einen den magnetischen Fluß führenden, ringkopfähnlichen magnetischen Leitkörper mit zwei Magnetschenkeln enthält,
-die jeweils mindestens eine magnetische Schicht mit vorbestimmtem magnetischen Verhalten aufweisen,
-deren dem Aufzeichnungsmedium zugewandten Magnetpole in (relativer) Bewegungsrichtung des Kopfes gesehen hintereinander geordnet sind, wobei ein Spalt vorbestimmter Weite ausgebildet ist,
und
-die außerhalb des Polbereiches einen Zwischenraum begrenzen, durch welchen sich die Windungen einer Schreib-und/oder Lesespulenwicklung erstrecken.

Ein entsprechender Magnetkopf einer solchen Speichereinrichtung ist z.B. aus der EP 0 012 912 A1 zu entnehmen. Mit diesem Kopf kann eine Speicherung von Informationen durch senkrechte Magnetisierung eines entsprechenden Aufzeichnungsmediums vorgenommen werden. Dieses Prinzip ist allgemein bekannt (vgl. z.B. "IEEE Transactions on Magnetics", Vol. MAG-16, No. 1, Januar 1980, Seiten 71 bis 76, oder Vol. MAG-20, No. 5, Sept. 1984, Seiten 657 bis 662 und 675 bis 680). Die für dieses vielfach auch als vertikale Magnetisie rung bezeichnete Prinzip vorzusehenden Aufzeichnungsmedien können in Form von starren Magnetspeicherplatten, flexiblen Einzelplatten (Floppy Discs) oder Magnetbändern vorliegen. Diese Medien weisen jeweils mindestens eine magnetisierbare Speicherschicht vorbestimmter Dicke auf, welche ein magnetisch anisotropes Material vorbestimmter Koerzitivfeldstärke, insbesondere aus einer CoCr-Legierung, enthält. Dabei ist die Achse der sogenannten leichten Magnetisierung dieser Schicht senkrecht zur Oberfläche des Mediums ausgerichtet. Mittels besonderer Magnetköpfe können dann längs einer Spur einzelne Informationen als Bits in aufeinanderfolgenden Abschnitten durch entsprechende Magnetisierung der Speicherschicht eingeschrieben werden.

Die für das Prinzip der sogenannten longitudinalen Magnetisierung bekannten kombinierten Schreib-und Lese-Magnetköpfe können jedoch nicht ohne weiteres auch für eine senkrechte Magnetisierung übernommen werden. Bei Verwendung dieser Köpfe, deren aus Magnetschenkeln gebildeter magnetischer Leitkörper im allgemeinen eine ringkopfähnliche Gestalt hat, läßt sich zwar die auch bei dem Prinzip der senkrechten Magnetisierung angestrebte Magnetflußführung zu einem möglichst geschlossenen Kreis mit geringem magnetischen Widerstand erreichen. Jedoch ist es schwierig, bei hohen Bit-Dichten und damit bedingt entsprechend kleiner Länge des sogenannten Luftspaltes, der zwischen den dem Aufzeichnungsmedium zugewandten Magnetpolen des Ringkopfes ausgebildet ist, ein hinreichend starkes Schreibfeld zu erzeugen.

Man sieht sich deshalb veranlaßt, für das Prinzip der senkrechten Magnetisierung spezielle Schreib-/Lese-Magnetköpfe zu entwickeln. Der Aufbau eines solchen Kopfes geht z.B. aus der eingangs genannten EP-A1 hervor. Dieser bekannte Magnetkopf weist zur Führung des magnetischen Flusses einen sogenannten Leitkörper auf. Dieser magnetische Leitkörper wird mit zwei Magnetschenkeln gebildet, die jeweils aus mindestens einer Schicht aus einem magnetischen Material mit vorbestimmten spezifischen magnetischen Eigenschaften bzw. magnetischem Verhalten wie z.B. aus einer speziellen NiFe-Legierung (z.B. "Permalloy": Warenzeichen der "Bell Telephone Manufacturing Comp.") bestehen. Mit ihren dem Aufzeichnungsmedium zugewandten Endbereichen sind zwei Magnetpole ausgebildet, die in Bewegungsrichtung des Kopfes gesehen hintereinander und mit vorbestimmter geringer Spaltweite zueinander angeordnet sind. An diese Endbereiche - schließt sich ein Bereich des Kopfes an, in dem die Magnetschenkel auf einen größeren gegenseitigen Abstand geführt sind. Auf diese Weise wird ein ausreichend weiter Zwischenraum zwischen den beiden Magnetschenkeln erhalten, durch welchen sich die Windungen einer Schreib-und Lesespulenwicklung erstrecken. Sowohl für die Schreibfunktion als auch für die Lesefunktion dieses Magnetkopfes wird die ringkopfähnliche Gestalt seines magnetischen Leitkörpers mit beiden Magnetschenkeln ausgenutzt.

Die einzelnen Teile dieses bekannten Magnetkopfes sind in Dünnfilmtechnik auf der ebenen Rückseite eines nicht-magnetischen Substrates aufgebracht. Diese Technik ist für Schreib-/Lese-Magnetköpfe allgemein bekannt (vgl. z.B. "Feinwerktechnik und Meßtechnik", 88. Jahrgang, Heft 2, März 1980, Seiten 53 bis 59, oder "Siemens-Zeitschrift", Band 52, Heft 7, 1978, Seiten 434 bis 437). Problematisch bei derartigen Dünnfilm-Magnetköpfen ist jedoch die Erzeugung hinreichend großer Schreibfelder unter gleichzeitiger Beibehaltung einer hohen Auflösung beim Lesen. Diese beiden Forderungen sind an sich gegensätzlicher Natur. Im allgemeinen sind nämlich hohe Magnetfelder nur mit großen Spaltweiten und/oder großen Poldicken zu erreichen, während sich eine hohe Auflösung bei hohen Bit-Dichten nur mit kleinen Spaltweiten und/oder geringen Poldicken erzielen läßt (vgl. z.B. "IEEE Transactions on Magnetics", Vol. MAG-19, No. 5, Sept. 1983, Seiten 1617 bis 1619). Darüber hinaus sollte bei einem Magnetkopf zur vertikalen Aufzeichnung das Schreibfeld möglichst asymmetrisch sein, um die Vertikalkomponente dieses Feldes an der ablaufenden Kante des schreibenden Magnetpoles anzuheben und die Vertikalkomponente entgegengesetzter Polarität an der vorlaufenden Kante des anderen Magnetpoles abzuschwächen. Bei dem bekannten Magnetkopf-Typ ist jedoch das Magnetfeld an der ablaufenden Kante im allgemeinen etwas schwächer als das Magnetfeld an der vorlaufenden Kante.

Aufgabe der vorliegenden Erfindung ist es somit, die magnetische Speichereinrichtung der eingangs genannten Art dahingehend zu verbessern, daß mit ihrem Magnetkopf eine Schreib-und Lesefunktion mit jeweils verhältnismäßig hohem Wirkungsgrad nach dem Prinzip der vertikalen Magnetisierung ermöglicht ist. Dabei sollen die erwähnten Forderungen hinsichtlich großer Schreibfelder und hohen Auflösungsvermögens zumindest weitgehend berücksichtigt sein.

Diese Aufgabe wird erfindungsgemäß dadurch gelöst, daß

-die mindestens eine Magnetschicht des in Bewegungsrichtung gesehen nachlaufenden Magnetschenkels zumindest in ihrem den Magnetpol ausbildenden Endbereich hinsichtlich ihres magnetischen Verhaltens verschieden ist gegenüber der mindestens einen Magnetschicht des vorlaufenden Magnetschenkels zumindest in deren den Magnetpol ausbildenden Endbereich
und

-die Koerzitivfeldstärke des Materials der Speicherschicht des Aufzeichnungsmediums hinreichend hoch gewählt ist, so daß ein Überschreiben der Speicherschicht des Aufzeichnungsmediums mit dem an dem Magnetpol des nachlaufenden Magnetschenkels hervorzurufenden Magnetfeld zumindest weitgehend ausgeschlossen ist.

Als charakteristisches magnetisches Verhalten der jeweiligen Magnetschichten sind zumindest in deren einen Magnetpol ausbildenden Endbereichen insbesondere der magnetische Widerstand der Schicht oder die Sättigungsmagnetisierung des Schichtmaterials anzusehen.

Die mit dieser Ausgestaltung der magnetischen Speichereinrichtung verbundenen Vorteile sind insbesondere darin zu sehen, daß beim Schreiben die Magnetisierung der Magnetschicht des nachlaufenden Magnetschenkels in ihrem Polbereich gegenüber der Magnetisierung der Magnetschicht des vorlaufenden Schenkels erniedrigt ist und deshalb auch die Vertikalkomponente des Magnetfeldes des nachlaufenden Schenkels entsprechend kleiner ist als das Vertikalfeld des vorlaufenden Magnetpoles. Dies bedeutet, daß der Magnetkopf mit einer sehr steilen Flanke des zwischen den beiden Magnetpolen ausgebildeten Magnetfeldes - schreibt. Damit wird auch die für die Leseamplitude wichtige magnetische Übergangslänge gegenüber dem üblichen Schreiben mit der ablaufenden Kante stark verkürzt. Der Magnetkopf der erfindungsgemäßen Speichereinrichtung schreibt also, bedingt durch das verschiedene magnetische Verhalten seiner Schenkel, im Unterschied zu bekannten Köpfen mit seinem vorlaufenden Magnetpol. Dies läßt sich insbesondere dadurch gewährleisten, daß für die Speicherschicht des Aufzeichnungsmediums ein Material mit einem so hohen Wert der (senkrechten) Koerzitivfeldstärke gewählt wird, daß das Magnetfeld des ablaufenden Magnetpoles nicht mehr ausreicht, um diese Speicherschicht zu beschreiben. Dagegen verhält sich der Magnetkopf beim Lesen aufgrund der bekanntlich geringeren Felder wie ein gebräuchlicher Dünnfilm-Ringkopf, der einen sehr scharfen magnetischen Übergang mit entsprechend großer Lesespannung registriert. Besonders vorteilhaft ist außerdem, daß die Spaltweite bei dem Magnetkopf der erfindungsgemäßen Speichereinrichtung ohne wesentliche Beeinträchtigung der Schreibeigenschaften sehr klein gehalten werden kann und daß damit die maximal erreichbare Bitdichte entsprechend groß ist.

Vorteilhafte Ausgestaltungen der erfindungsgemäßen Speichereinrichtung gehen aus den Unteransprüchen hervor.

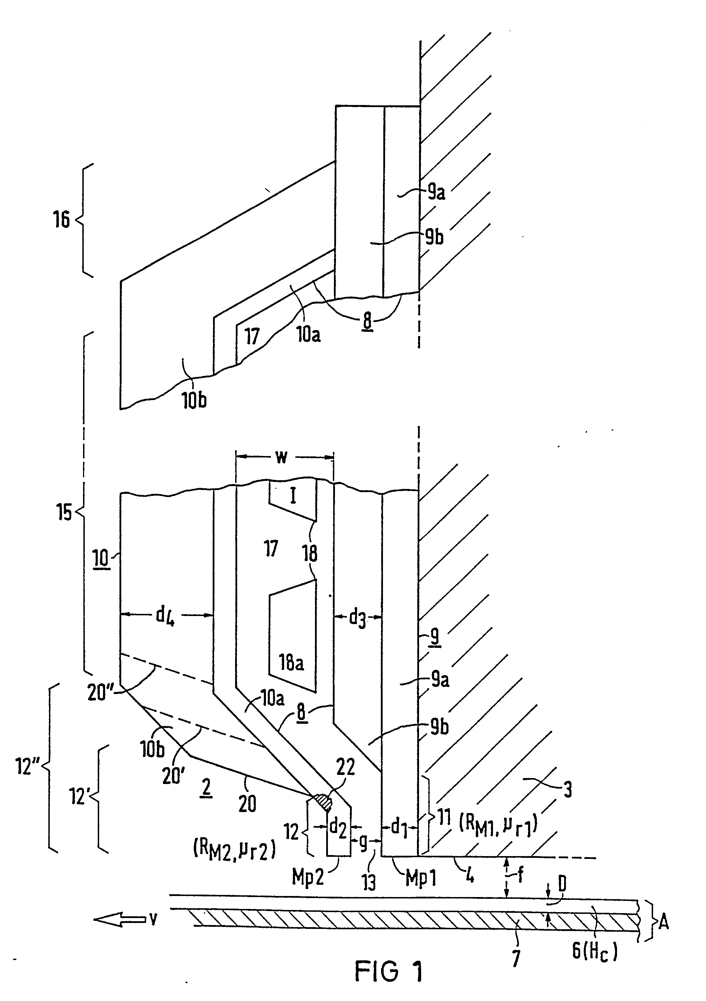

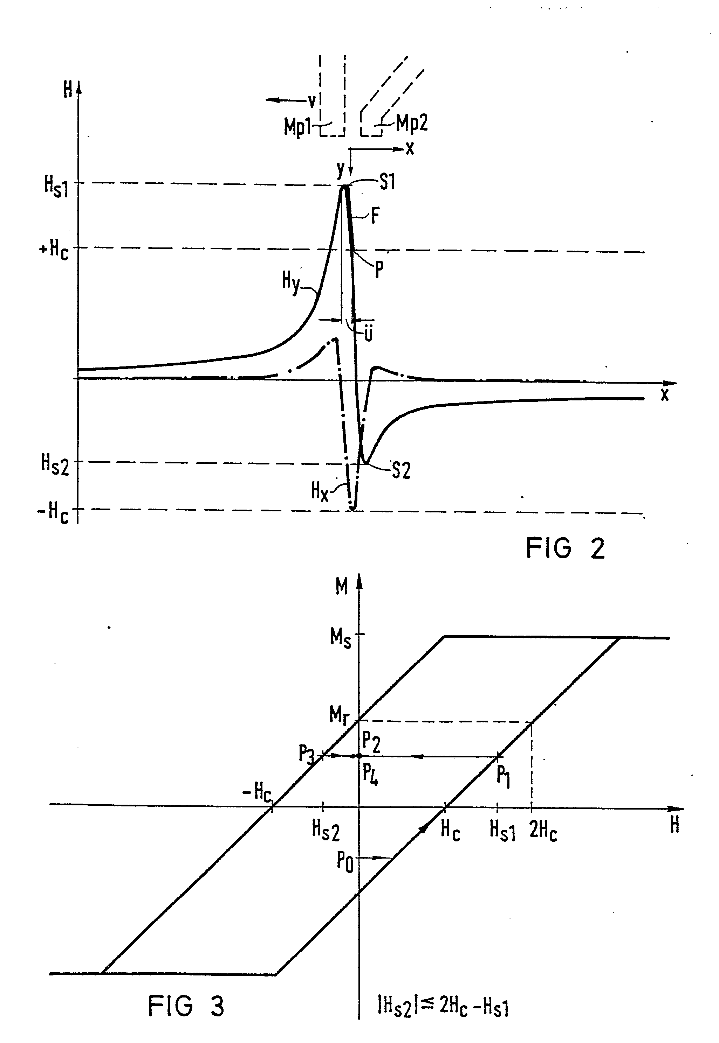

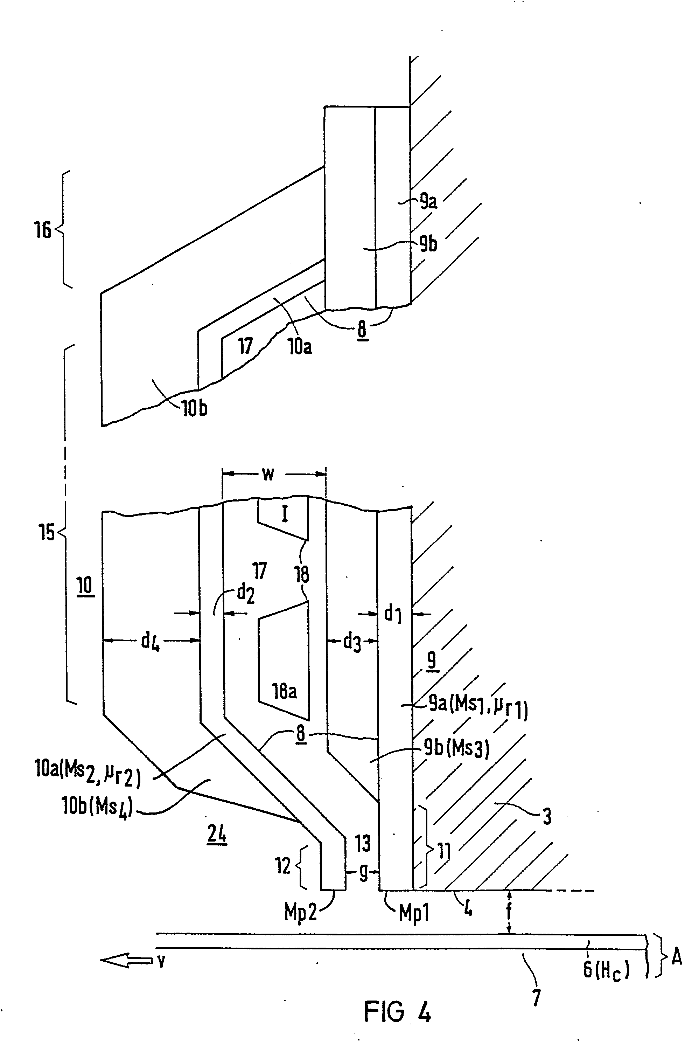

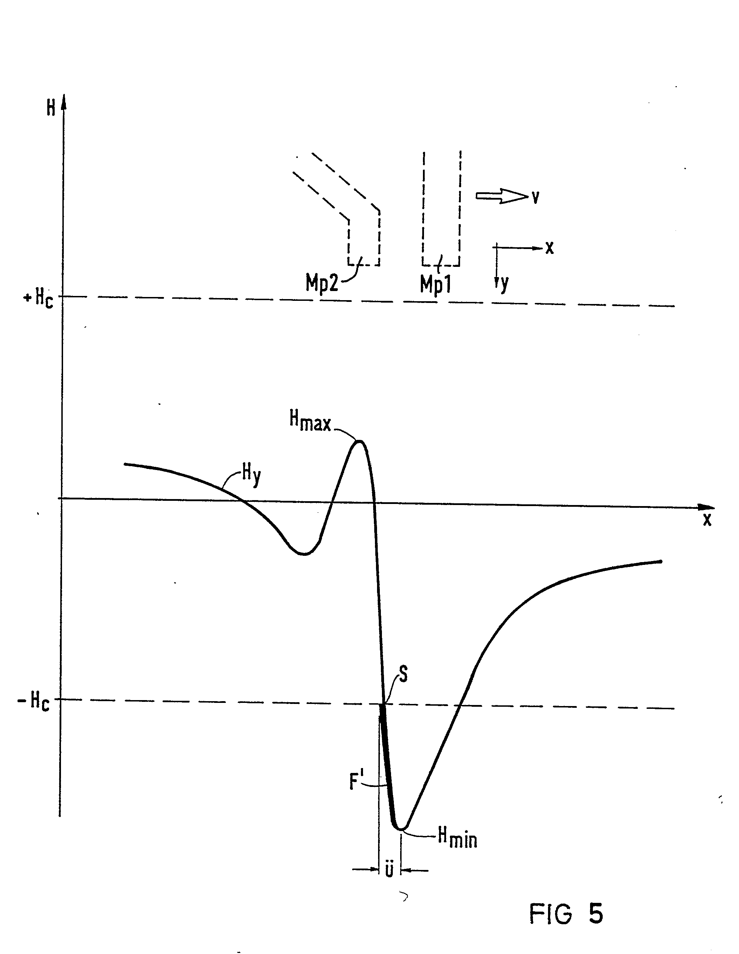

Zur weiteren Erläuterung der Erfindung wird auf die Zeichnung Bezug genommen, in deren Figure 1 ein Ausführungsbeispiel einer erfindungsgemäßen Speichereinrichtung schematisch veranschaulicht ist. Figure 2 zeigt in einem Diagramm die mit dem Magnetkopf dieser Speichereinrichtung gemäß Figur 1 erzeugte senkrechte Magnetfeldkomponente. In Figur 3 sind in einem weiteren Diagramm die entsprechenden Magnetisierungsverhältnisse angedeutet. Figur 4 zeigt ein anderes Ausführungsbeispiel einer erfindungsgemäßen Speichereinrichtung, während in Figur 5 aus einem Diagramm die mit dem Magnetkopf dieser Speichereinrichtung erzeugte senkrechte Magnetfeldkomponente hervorgeht.

Bei dem in Figur 1 nur teilweise als Längsschnitt dargestellten Magnetkopf einer ersten erfindungsgemäßen Speichereinrichtung wird von an sich bekannten, ringkopfähnlichen Ausführungsformen mit schichtweisem Aufbau ausgegangen, wie sie für das Prinzip der senkrechten (vertikalen) Magnetisierung entwickelt worden sind (vgl. z.B. die eingangs genannte EP-A1). Mit dem allgemein mit $2$ bezeichneten Magnetkopf soll sowohl eine Schreib-als auch Lese-Funktion auszuüben sein. Dieser Kopf befindet sich auf einer Flachseite eines nicht-magnetischen Substrates 3, das die Stirn-oder insbesondere die Rückseite eines gebräuchlichen, auch als Flugkörper bezeichneten Elementes bildet und das in der Figur nicht weiter ausgeführt ist. Der Magnetkopf ist relativ zu einem an sich bekannten Aufzeichnungsmedium A in geringer Flughöhe f zu führen, wobei die relative Bewegungsrichtung des Aufzeich nungsmediums bezüglich des Magnetkopfes durch eine mit v bezeichnete gepfeilte Linie angedeutet ist. Die sich zwischen der zumindest einer Flugkufe gestalteten, dem Aufzeichnungsmedium A zugewandten Unterseite des Kopfes $2$ und dem Aufzeichnungsmedium einstellende Flughöhe f beträgt beispielsweise nur einige Zehntel Mikrometer. Das Aufzeichnungsmedium A, z.B. eine Magnetspeicherplatte, weist eine Speicherschicht 6 auf, die vertikal (senkrecht) orientiert ist und eine vorbestimmte Dicke D hat. Das Material der Speicherschicht, für das beispielsweise eine CoCr-Legierung gewählt wird, soll dabei einen vorbestimmten hohen Wert der (senkrechten) Koerzitivfeldstärke $H_c$ von beispielsweise mehr als 20 kA/m, vorzugsweise mehr als 60 kA/m aufweisen (vgl. z.B. EP 0 120 413 A1 oder EP 0 054 269 A2).

Die Speicherschicht 6 kann vorteilhaft noch auf mindestens einer weiteren, weichmagnetischen Schicht, z.B. aus einer speziellen NiFe-Legierung oder aus amorphem CoZr oder CoHf, die gegebenenfalls noch ternäre Zusätze wie z.B. aus Ni oder Nb aufweisen, angeordnet sein. Diese Unterschicht ist in der Figur mit 7 bezeichnet.

Der Magnetkopf $2$ enthält einen den Magnetfluß führenden, ringkopfähnlichen magnetischen Leitkörper $8$ mit zwei Magnetschenkeln $9$ und $10$. Diese Schenkel sind weitgehend und insbesondere in ihren dem Aufzeichnungsmedium A zugewandten, Magnetpole Mp1 bzw. Mp2 ausbildenden Endbereichen 11 bzw. 12 zumindest annähernd senkrecht zur Oberfläche des Aufzeichnungsmediums ausgerichtet. Unter den Endbereichen wird dabei jeweils das dünne Endstück eines Magnetschenkels verstanden, das eine zumindest weitgehend einheitliche Querausdehnung bzw. Dicke aufweist oder das durch keine weiteren Schichten verstärkt ist. Die Endbereiche 11 und 12 sind durch einen Luftspalt 13 räumlich getrennt, der im Bereich der Magnetpole Mp1 und Mp2 eine vorteilhaft geringe longitudinale, d.h. in Bewegungsrichtung v des Magnetkopfes weisende Weite g von unter 1 $\mu$m, insbesondere von unter 0,5 $\mu$m, vorzugsweise unter 0,25 $\mu$m aufweist. In einem mittleren Bereich 15 des magnetischen Leitkörpers $8$ ist der Abstand zwischen den beiden Magnetschenkeln $9$ und $10$ gegenüber dieser Spaltweite g erweitert, indem z.B. der hinsichtlich der Bewegungsrichtung v rückwärtige, d.h. nachlaufende Magnetschenkel $10$ auf eine größere Weite w bezüglich des vorderen, eben ausgebildeten und dem Substrat 3 zugewandten Magnetschenkels $9$ führt. Außerhalb dieses Bereiches 15 ist auf der dem Aufzeichnungsmedium A abgewandten Seite des Leitkörpers $8$ der Magnetschenkel $10$ in bekannter Weise in einem Verbindungsbereich 16 an den Magnetschenkel $9$ angefügt, so daß sich damit die ringkopfähnliche Gestalt des Leitkörpers $8$ ergibt.

Durch den zwischen den beiden Magnetschenkeln $9$ und $10$ in dem mittleren Bereich 15 ausgebildeten Zwischenraum 17 erstreckt sich mindestens eine flache Spulenwicklung 18, die sowohl als Schreib-als auch als Lesespule dienen kann. Diese in der Figur nur mit einer einzigen Lage 18a angedeutete Wicklung kann auch mehrlagig ausgebildet sein und weist im allgemeinen eine verhältnismäßig große Anzahl von Windungen auf. Durch sie kann ein verhältnismäßig großer Schreibstrom I fließen.

Die beiden Magnetschenkel $9$und $10$ des Magnetkopfes $2$ sind jeweils durch mindestens eine magnetische Schicht 9a bzw. 10a mit einer Schichtdicke $d_1$ bzw. $d_2$ ausgebildet. Unter der jeweiligen Schichtdicke wird dabei die in dem jeweiligen Polbereich 11 bzw. 12 herrschende Ausdehnung der entsprechenden Schicht in Bewegungsrichtung v verstanden. Gemäß der Erfindung sollen nun diese Magnetschichten zumindest in ihren Polbereichen 11 und 12 unterschiedliche magnetische Widerstände haben, wobei die Schicht 10a des in der relativen Bewegungsrichtung gesehen nachlaufenden Magnetschenkels $10$ den wesentlich höheren, vorzugsweise um mindestens einen Faktor 2 höheren magnetischen Widerstand $R_{M2}$ aufweisen soll. Der demgegenüber geringere magnetische Widerstand der Schicht 9a des vorlaufenden Magnetschenkels $9$ ist dabei mit $R_{M1}$ bezeichnet. Die Größe des magnetischen Widerstandes der jeweiligen Magnetschicht hängt dabei bekanntlich von der reversiblen Permeabilität $\mu_r$ und der Geometrie der jeweiligen Schicht ab. Die reversible Permeabilität der Schichten kann durch Materialwahl und durch die Herstellungsbedingungen, z.B. beim Sputtern, festgelegt werden. Vorzugsweise wird für die Magnetschicht 9a des vorlaufenden Magnetschenkels 9 ein Material mit einer reversiblen Permeabilität $\mu_{r1}$ gewählt, die größer ist als die reversible Permeabilität $\mu_{r2}$ der Magnetschicht 10a des nachlaufenden Magnetschenkels. Vorteilhaft soll dabei die größere Permeabilität $\mu_{r1}$ einen Wert über 1000, vorzugsweise über 3000 haben, während der Wert der geringeren Permeabilität $\mu_{r2}$ im allgemeinen unter 1000 liegen sollte und beispielsweise ungefähr 500 beträgt. Vorzugsweise werden Materialien gewählt, deren reversible Permeabilitäten sich mindestens um einen Faktor 3 unterscheiden.

Darüber hinaus kann durch geeignete Wahl der Schichtdicken $d_1$ und $d_2$ der Magnetschichten 9a und 10a der magnetische Widerstand dieser Schichten zusätzlich variiert werden. Diese Schichtdicken sollten kleiner als 2 $\mu m$, insbesondere kleiner als 1 $\mu m$, vorzugsweise kleiner als 0,7 $\mu m$ gewählt werden. Gegebenenfalls wird dabei für die Magnetschicht 9a des vorlaufenden Magnetschenkels 9 ein Wert der Dicke $d_1$ vorgesehen, der größer als der Wert der Dicke $d_2$ der Magnetschicht 10a des nachlaufenden Magnetschenkels 10 ist. Für Bit-Dichten über 30 kFCI (kilo Flux Changes per Inch) können beispielsweise $d_1 < 0,6$ $\mu m$, $d_2 < 0,4$ $\mu m$ und $g < 0,25$ $\mu m$ zu wählen sein. Die Flughöhe f und die Dicke D der CoCr-Speicherschicht 6 sollten in diesem Fall der Ungleichung $f + D < 0,5$ $\mu m$ genügen. Außerdem sollte die Dicke der weichmagnetischen Unterschicht 7 die Dicke des dickeren der beiden Magnetpole Mp1, Mp2 nicht wesentlich unterschreiten.

Wie aus Figur 1 ferner hervorgeht, kann jeder der Magnetschenkel 9 und 10 außerhalb des jeweiligen Endbereichs 11 bzw. 12 mit einer zusätzlichen, verhältnismäßig dicken Magnetschicht 9b bzw. 10b versehen sein, wobei diese Schichten insbesondere den mittleren Bereich 15 des magnetischen Leitkörpers 8 mit der Spulenwicklung 18 abdecken. Die Dicken dieser zusätzlichen Schichten 9b und 10b sind mit $d_3$ bzw. $d_4$ bezeichnet. Die Schichten 9b und 10b reichen nicht bis zu den jeweiligen Magnetpolen Mp1 bzw. Mp2 heran, sondern enden jeweils ein vorbestimmtes Stückweit davon entfernt. Sie legen so die oberen Grenzen der Endbereiche 11 bzw. 12 fest. Dementsprechend beginnt der Endbereich 12 des Magnetschenkels 10 an der Stelle, an der die mit 20 bezeichnete Außenseite der Magnetschicht 10b an die Außenseite der Magnetschicht 10a anstößt. Wie in der Figur ferner durch gestrichelte Linien 20' und 20" angedeutet sein soll, kann die Außenseite der Magnetschicht 10b auch weiter zurückgezogen enden, so daß dann der Endbereich der Magnetschicht 10a entsprechend weiter ausgedehnt ist. Diese durch die Außenseiten 20'

bzw. 20" begrenzten Endbereiche sind mit 12' bzw. 12" bezeichnet. Die zusätzlichen Schichten 9b und 10b können so vorteilhaft zur Beeinflussung des magnetischen Widerstandes des jeweiligen Magnetschenkels dienen und außerdem auch für die angestrebte Asymmetrierung des Feldverlaufes des Schreibfeldes herangezogen werden. So haben verschiedene Lagen der Außenseiten 20, 20', 20" bzw. verschiedene Ausdehnungen der Magnetschicht 10b bezüglich des Aufzeichnungsmediums A auf das Schreib-Lese-Verhalten des Magnetkopfes 2 einen starken Einfluß. So führen z.B. kürzere Schenkel zu besseren Schreibfeldern, jedoch zu kleineren Leseamplituden.

Eine weitere Möglichkeit zur Vergrößerung des magnetischen Widerstandes des nachlaufenden Magnetschenkels 10 ist dadurch gegeben, daß man eine den magnetischen Widerstand erhöhende Querschnittsverminderung in der Magnetschicht 10a vorsieht. Diese Querschnittsverminderung kann vorzugsweise an dem dem mittleren Bereich 15 zugewandten Rand des Endbereiches 12 oder 12' oder 12" liegen. Gemäß dem dargestellten Ausführungsbeispiel läßt sich eine derartige Widerstandserhöhung dadurch erhalten, daß man z.B. bei einem Ionenstrahlätzen der zusätzlichen Magnetschicht 10b des Schenkels 10 einen Ätzgraben in der den Magnetpol Mp2 ausbildenden Magnetschicht 10a dieses Schenkels durch Überätzung erzeugt. Der Umriß dieses Ätzgrabens ist in der Figur durch eine gestrichelte Linie 22 angedeutet.

Auf das Sättigungsverhalten der Endstücke 11 und 12 bzw. 12', 12" der Magnetschenkel 9 bzw. 10 mit den Polen Mp1 und Mp2 und damit auf die erzeugbaren Magnetfelder hat auch die Lage der Schreib-/Lesespulenwicklung 18 Einfluß. So sind die Magnetfelder umso größer, je näher diese Wicklung an dem Spalt 13 liegt. Hierbei ist jedoch zu berücksichtigen, daß mit dieser Annäherung die gewünschte Asymmetrie der Feldverteilung teilweise wieder rückgängig gemacht wird. Man hat somit eine weitere Möglichkeit, durch die Lage der Schreib-/Lesespulenwicklung 18 sowohl die Amplitude als auch die Asymmetrie des Vertikalfeldes zu beeinflussen.

Als Materialien für die Schichten 9a, 9b und 10a, 10b kommen insbesondere FeNi-Legierungen wie z.B. aus "Permalloy" oder amorphe CoZr-oder CoHf-Legierungen in Frage. Gegebenenfalls können den Legierungspartnern dieser amorphen Legierungen noch weitere, z.B. ternäre Partner beigefügt sein.

Aufgrund der so einzustellenden unterschiedlichen magnetischen Widerstandsverhältnisse in den beiden Magnetschenkel 9 und 10 insbesondere in ihren entsprechenden Endbereichen 11 bzw. 12, 12', 12" läßt sich dann erreichen, daß praktisch nur mit dem Magnetpol Mp1 des vorlaufenden Magnetschenkels 9 die Schreibfunktion ausgeübt wird. Um diese charakteristische Wirkungsweise des Magnetkopfes 2 zu gewährleisten, d.h. ein Überschreiben von mit dem vorlaufenden Magnetschenkel 9 geschriebener Informationen durch den nachlaufenden Magnetschenkel 10 zumindest weitgehend zu vermeiden, ist bei der Magnetspeichereinrichtung nach der Erfindung außerdem vorgesehen, daß die Koerzitivfeldstärke $H_c$ der Speicherschicht 6 des Aufzeichnungsmediums A so hoch gewählt ist, daß das Magnetfeld des ablaufenden Pols Mp2 nicht mehr zu einer Ummagnetisierung der geschriebenen Informationen ausreicht. Die entsprechenden Feldverhältnisse sind aus dem Diagramm der Figur 2 näher abzulesen. Dabei soll der absolute Wert der Koerzitivfeldstärke $H_c$ z.B. mindestens 20 kA/m, vorzugsweise mindestens 60 kA/m betragen.

In diesem Diagramm ist die Feldstärke H des von den beiden Magnetpolen Mp1 und Mp2 erzeugten Magnetfeldes in Abhängigkeit von der in Bewegungsrichtung v weisenden Ausdehnung x des Magnetkopfes wiedergegeben. Dabei sind in dem Diagramm die Konturen dieser Magnetpole nur schematisch, nicht maßstabgerecht angedeutet. Die sich ergebende, in Ordinatenrichtung aufgetragenen Feldstärke H ist an der Oberfläche des Aufzeichnungsmediums A in Normalenrichtung (y-Richtung) gemessen. Wie aus dem Diagramm zu ersehen ist, weist die Feldstärkekurve $H_y$ ein im wesentlichen dem vorlaufenden Magnetpol Mp1 zuzuschreibendes ausgeprägtes (positives) Maximum auf, das ganz deutlich das entsprechende - (positive) Schaltfeld "$+H_c$" der Speicherschicht 6 überschreitet. Unter diesem durch eine gestrichelte Linie angedeuteten Schaltfeld "$+H_c$" wird dabei das Magnetfeld verstanden, das gerade ausreicht, um eine Ummagnetisierung in der Speicherschicht 6 zu bewirken. Im Idealfall entspricht dieses Schaltfeld der entsprechenden Koerzitivfeldstärke des Materials der Speicherschicht; im allgemeinen weicht es aber hiervon um einen geringfügigen Faktor ab. In dem Diagramm ist jedoch der Idealfall angenommen, in dem das Schaltfeld gleich der Koerzitivfeldstärke $H_c$ gesetzt ist. Wie außerdem aus dem Diagramm hervorgeht, zeigt die Feldstärkekurve $H_y$ zwischen dem dem vorlaufenden Magnetpol Mp1 zuzuschreibenden Scheitelpunkt S1 mit $H_{s1}$ und dem Schnittpunkt P mit dem Schaltfeld "$+H_c$" vorteilhaft einen sehr steilen Verlauf. Dies bedeutet, daß der Magnetkopf mit dieser sehr steilen, in dem Diagramm durch eine Verstärkung der Feldstärkekurve hervorgehobenen Flanke F zwischen den Magnetpolen Mp1 und Mp2 schreibt. D.h., die sogenannte magnetische Übergangslänge Ü, die die Ausdehnung dieser Flanke F in x-Richtung darstellt, ist gegenüber dem bisher bekannten Schreiben mit der ablaufenden Kante bekannter Magnetköpfe wesentlich verkürzt. Außerdem ist aus dem Diagramm die Tatsache zu ersehen, daß ein Schreiben des nachlaufenden Magnetpols Mp2 praktisch nicht möglich ist. Der diesem Magnetpol zuzuschreibende Verlauf der Feldstärkekurve $H_y$ hat nämlich in deren negativen Scheitelpunkt S2 einen Minimalwert $H_{s2}$, der ganz wesentlich oberhalb des entsprechenden, durch eine gestrichelte Linie dargestellten negativen Schaltfeldes "$-H_c$" liegt. D.h., die Feldstärkekurve $H_y$ schneidet nicht diese Linie. Für die Speicherschicht 6 eines Aufzeichnungsmediums A der erfindungsgemäßen Speichereinrichtung ist also ein Material zu wählen, das eine entsprechend hohes Schaltfeld ergebende Koerzitivfeldstärke $H_c$ aufweist. Entsprechende Materialien hierfür sind allgemein bekannt (vgl. z.B. die genannten EP 0 120 413 oder EP 0 054 269). In dem Diagramm ist außerdem durch eine strichpunktierte Linie die Feldstärkekurve $H_x$ der in Bewegungsrichtung v ausgebildeten (longitudinalen) Feldkomponente eingetragen.

Gemäß dem Kurvenverlauf des Diagramms der Figur 2 wurde von einem Magnetkopf 2 ausgegangen, dessen Schreibstrom I ein Maximum $H_{s1}$ des Magnetpoles Mp1 des vorlaufenden Magnetschenkels und ein Minimum $H_{s2}$ des Magnetpoles Mp2 des nach laufenden Magnetschenkels hervorruft. Demgegenüber wird bei einem Schreibstrom mit umgekehrter Flußrichtung ein entsprechender, jedoch zur x-Achse gespiegelter Feldverlauf erhalten.

Die dem Kurvenverlauf der Figur 2 entsprechenden Magnetisierungsverhältnisse sind in dem Diagramm der Figur 3 angedeutet. Dabei ist zur vereinfachten Beschreibung ein Aufzeichnungsmedium nur mit einer idealen, vertikalen dünnen Speicherschicht 6, einer sogenannten Einfachschicht, angenommen. In dieser Figur ist die gescherte Magnetisierungskurve angegeben, wobei auf der Ordinate die Magnetisierung M und auf der Abszisse die Feldstärke H in willkürlichen Einheiten aufgetragen sind. Für eine derartige dünne Schicht 6 aus einem Material mit einer Sättigungsmagnetisierung $M_s$ beträgt dabei der Entmagnetisierungsfaktor N in Richtung der Schichtnormalen genau N = 1; d.h. die Remanenz $M_r$ und die Koerzitivfeldstärke $H_c$ sind in diesem Falle gleich groß: $M_r = H_c$. Vor Beginn des Schreibvorganges befindet sich die zu beschreibende Stelle auf der Hysteresekurve im Punkt $P_O$. Der sich relative zu der Speicherschicht bewegende Magnetkopf magnetisiert dann zunächst mit seinem vorlaufenden Magnetpol Mp1 mit der maximalen Schreibfeldstärke $|H_{s1}| > H_c$ die Schicht um, so daß die Magnetisierung längs der Hysteresekurve zum Punkt $P_1$ wandert. Das vertikale Feld wird dann zwischen den beiden Magnetpolen Mp1 und Mp2 umgepolt, wobei der Punkt $P_2$ auf der Ordinate durchschritten wird, und nimmt schließlich den negativen Wert des Betrages $|H_{s2}|$ mit $|H_{s2}| < H_c$ an.

Dabei wird auf der Magnetisierungskurve der Punkt $P_3$ erreicht. Mit der dann folgenden Feldabnahme auf Null wird die Magnetisierungsumkehr und damit der Schreibvorgang abgeschlossen. Der entsprechende Punkt auf der Ordinate ist mit $P_4$ bezeichnet. Er deckt sich mit dem Punkt $P_2$. Da die Größe des Lesesignals proportional zur Magnetisierung in diesem Punkt $P_4$ ist, muß das Vertikalfeld des ablaufenden Magnetpoles Mp2 der Ungleichung genügen:

$$|H_{s2}| \leq 2 \cdot H_c - |H_{s1}|.$$

Bei dieser Formulierung der Ungleichung ist auch berücksichtigt, daß bei umgekehrter Stromflußrichtung des Schreibstromes I $H_{s1}$ negativ und $H_{s2}$ positiv werden.

Dem Diagramm der Figur 3 wurde ein Aufzeichnungsmedium A mit einer Einfachschicht als Speicherschicht 6 zugrundegelegt. Bei Verwendung eines Doppelschicht-Speichermediums, das zusätzlich zu der insbesondere aus CoCr bestehenden Speicherschicht 6 noch eine weichmagnetische Unterlage 7 z.B. aus NiFe, CoZr, CoHf usw. aufweist, ist zusätzlich noch zu berücksichtigen, daß alle in Figur 1 wiedergegebenen kritischen Abmessungen: g, $(d_1 + g/2)$, $(d_2 + g/2)$, $(f + D)$ von der minimalen Flußwechsel-Wellenlänge abhängen (vgl. "IEEE Transactions on Magnetics", Vol. MAG-19, No. 5, 1983, Seiten 1611 bis 1613). Die Vorteile einer solchen Doppelschicht 6, 7 im Vergleich zu einer Einfachschicht sind die wesentlich größeren Vertikalfelder beim Schreiben, die durch die weichmagnetische Unterlage 7 auf Kosten eines unerwünschten Horizontalfeldes stark bevorzugt sind. Die Magnetschicht wird hierbei wesentlich tiefer und schärfer ummagnetisiert und damit das Lesesignal vorteilhaft deutlich vergrößert.

Der in Figur 4 nur teilweise als Längsschnitt dargestellte Magnetkopf einer weiteren erfindungsgemäßen Speichereinrichtung weist einen Aufbau auf, der weitgehend dem Aufbau des in Figur 1 dargestellten Kopfes 2 entspricht. In den Figuren sind deshalb übereinstimmende Teile mit den gleichen Bezugszeichen versehen. Die beiden Magnetschenkel 9 und 10 dieses mit 24 bezeichneten Magnetkopfes sind ebenfalls jeweils durch mindestens eine magnetische Schicht 9a bzw. 10a mit einer Schichtdicke $d_1$ bzw. $d_2$ ausgebildet. Im Gegensatz zu der Ausführungsform gemäß den Figuren 1 bis 3 sollen sich hier die erfindungsgemäßen Maßnahmen bzgl. des magnetischen Verhaltens der einzelnen Magnetschenkel nicht auf deren magnetischen Widerstand, sondern auf die Sättigungsmagnetisierung ihres Materials beziehen.

Dementsprechend sollen also bei der Ausführungsform nach Figur 4 für die Magnetschichten gemäß der Erfindung Materialien mit unterschiedlichen Sättigungsmagnetisierungen Ms gewählt werden, wobei das Material der Schicht 9a des in der relativen Bewegungsrichtung v gesehen vorlaufenden Magnetschenkels 9 die höhere Sättigungsmagnetisierung $Ms_1$ haben soll. Die demgegenüber geringere Sättigungsmagnetisierung des Materials der Schicht 10a des nachlaufenden Magnetschenkels 10 ist dabei mit $Ms_2$ bezeichnet. Die Werte der Sättigungsmagnetisierungen $Ms_1$ und $Ms_2$ sollen sich insbesondere um einen Faktor von mindestens 1,4 unterscheiden. Als Materialien für die Schichten 9a und 10a kommen insbesondere Legierungen wie z.B. "Permalloy" oder amorphe CoZr-oder CoHf-Legierungen in Frage. Vorteilhaft soll dabei die größere Sättigungsmagnetisierung $Ms_1$ einen Wert über 1000 kA/m, vorzugsweise über 1100 kA/m haben, während der Wert der kleineren Sättigungsmagnetisierung $Ms_2$ beispielsweise unter 900 kA/m, vorzugsweise unter 800 kA/m liegt. "Permalloy" hat z.B. eine Sättigungsmagnetisierung in der Größenordnung von 800 kA/m, während die Sättigungsmagnetisierung der genannten binären amorphen Materialien in der Größenordnung von 1100 kA/m liegt. Gegebenenfalls kommen auch ternäre amorphe Legierungen mit hoher Sättigungsmagnetisierung $Ms_1$ in Frage. Dabei können die Sättigungsmagnetisierungen Ms der einzelnen Schichten in bekannter Weise durch die Herstellungsbedingungen oder durch die Wahl der Legierungszusammensetzung beeinflußt werden.

Wie aus Figur 4 ferner hervorgeht, kann jeder der Magnetschenkel 9 und 10 außerhalb des durch die Endbereiche 11 bzw. 12 eingenommenen Bereichs mit einer zusätzlichen, verhältnismäßig dicken Magnetschicht 9b bzw. 10b versehen sein, wobei diese Schichten insbesondere den mittleren Bereich 15 mit der Spulenwicklung 18 abdecken. Die Dicken dieser zusätzlichen Schichten 9b und 10b sind mit $d_3$ bzw. $d_4$ bezeichnet. Diese zusätzlichen Schichten können vorteilhaft zur Verringerung des magnetischen Widerstandes in dem magnetischen Leitkörper 8 dienen und außerdem auch für die angestrebte Asymmetrierung des Feldverlaufes des Schreibfeldes herangezogen werden.

Diese gewünschte Asymmetrie wird insbesondere durch geeignete Wahl der Dicken der einzelnen Magnetschichten sowie der Sättigungsmagnetisierungen ihrer Materialien erreicht. So kann vorteilhaft die Schichtdicke $d_1$ der Magnetschicht 9a des vorlaufenden Magnetschenkels 9 mit der hohen Sättigungsmagnetisierung $Ms_1$ gegebenenfalls

größer als die Schichtdicke $d_2$ der Magnetschicht 10a mit niedrigerer Sättigungsmagnetisierung $Ms_2$ des nachlaufenden Magnetschenkels 10 gewählt werden. Außerdem läßt sich vorteilhaft für die zusätzliche Magnetschicht 9b des vorlaufenden Magnetschenkels 9 ein Material vorsehen, dessen Sättigungsmagnetisierung $Ms_3$ größer als die Sättigungsmagnetisierung $Ms_4$ des Material der zusätzlichen Magnetschicht 10b des nachlaufenden Magnetschenkels 10 ist. Gemäß dem dargestellten Ausführungsbeispiel sei angenommen, daß für die Magnetschichten 9b und 10b die gleichen Materialien wie die der zu ihnen jeweils benachbarten Schichten 9a bzw. 10a vorgesehen werden, so daß dann gilt: $Ms_3 = Ms_1$ und $Ms_4 = Ms_2$. Man kann jedoch auch Materialien mit davon abweichenden Sättigungsmagnetisierungen wählen.

Besonders vorteilhaft ist es, wenn man zumindest für einige der einzelnen Magnetschichten des in Figur 4 dargestellten Magnetkopfes 24 Materialien vorsieht, die neben den vorbe stimmten Sättigungsmagnetisierungen auch unterschiedliche Permeabilitäten aufweisen. Dabei wird nachfolgend die reversible Permeabilität $\mu_r$ der Materialien zugrundegelegt. So kann man insbesondere für die den Spalt 13 begrenzende Magnetschicht 9a des vorlaufenden Magnetschenkels 9 ein Material wählen, dessen Permeabilität $\mu_{r1}$ größer ist als die Permeabilität $\mu_{r2}$ der den Spalt 13 begrenzenden magnetischen Schicht 10a des nachlaufenden Magnetschenkels 10. Da wegen dieser Maßnahmen die Schicht 10a bei hohen Schreibströmen I keinen zusätzlichen Fluß mehr aufnehmen kann, führt eine weitere Steigerung des Schreibstromes I dazu, daß die Magnetschicht 9a des anderen Magnetschenkels 9 aus Material mit der wesentlich größeren Sättigungsmagnetisierung $Ms_1$, die Schreibfunktion ausübt. Beim Lesen hingegen sind bekanntlich die aus der Speicherschicht 6 des Aufzeichnungsmediums A austretenden Magnetfelder verhältnismäßig klein, so daß diese die Magnetschicht 10a aus dem Material mit der geringeren Sättigungsmagnetisierung $Ms_2$ nicht in die Sättigung zu treiben vermögen. Folglich wird also auch mit dieser Magnetschicht die Lesefunktion ausgeübt. D.h. aber, daß beim Lesen der Magnetkopf 24 als gewöhnlicher Ringkopf mit dem bekannt guten Wirkungsgrad arbeitet.

Um diese charakteristische Wirkungsweise des Magnetkopfes 24 zu gewährleisten, d.h. ein Überschreiben von mit dem vorlaufenden Magnetschenkel 9 geschriebener Informationen mit dem nachlaufenden Magnetschenkel 10 zu vermeiden, ist bei dieser Magnetspeichereinrichtung nach der Erfindung ebenfalls vorgesehen, daß die Koerzitivfeldstärke $H_c$ der Speicherschicht 6 des Aufzeichnungsmediums A so hoch gewählt ist, daß das Magnetfeld des ablaufenden Pols Mp2 nicht mehr ausreicht, um die Speicherschicht 6 zu beschreiben. Die entsprechenden Feldverhältnisse sind aus dem Diagramm der Figur 5 näher abzulesen. Dabei soll der absolute Wert der Koerzitivfeldstärke $H_c$ z.B. mindestens 30 kA/m, vorzugsweise mindestens 60 kA/m betragen.

In diesem Diagramm der Figur 5 ist die Feldstärke H des von den beiden Magnetpolen Mp1 und Mp2 erzeugten Magnetfeldes in Abhängigkeit von der in Bewegungsrichtung v weisenden Ausdehnung x des Magnetkopfes wiedergegeben. Die Feldstärke ist dabei an der Oberfläche des Aufzeichnungsmediums in Normalenrichtung (y-Richtung) gemessen. Außerdem sind in dem Diagramm schematisch, nicht maßstabgerecht die Konturen des vorlaufenden Poles Mp1 und des ablaufenden Poles Mp2 angedeutet. Wie aus dem Diagramm zu ersehen ist, weist die Feldstärkekurve $H_y$ ein im wesentlichen dem vorlaufenden Magnetpol Mp1 zuzuschreibendes ausgeprägtes (negatives) Maximum auf, das ganz deutlich das entsprechende (negative) Schaltfeld ($-H_c$) der Speicherschicht 6 unterschreitet. Unter diesem durch eine gestrichelte Linie angedeuteten Schaltfeld ($-H_c$) wird dabei das Magnetfeld verstanden, das gerade ausreichend ist, um eine Ummagnetisierung in der Speicherschicht 6 zu bewirken. Im Idealfall entspricht dieses Schaltfeld der entsprechenden Koerzitivfeldstärke des Materials der Speicherschicht; im allgemeinen weicht es aber hiervon um einen geringfügigen Wert ab. In dem Diagramm ist jedoch der Idealfall angenommen, indem das Schaltfeld gleich der Koerzitivfeldstärke $H_c$ gesetzt ist. Wie außerdem aus dem Diagramm hervorgeht, zeigt die Feldstärkekurve zwischen Minimum $H_{min}$ und dem Schnittpunkt S mit dem Schaltfeld ($-H_c$) vorteilhaft einen sehr steilen Verlauf. Dies bedeutet, daß der Magnetkopf mit dieser sehr steilen, in dem Diagramm durch eine Verstärkung der Feldstärkekurve hervorgehobenen Flanke F' zwischen den Magnetpolen Mp1 und Mp2 schreibt. D.h., daß die sogenannte magnetische Übergangslänge Ü, die die Ausdehnung dieser Flanke F' in x-Richtung darstellt, gegenüber dem bisher bekannten Schreiben mit der ablaufenden Kante bekannter Magnetköpfe wesentlich verkürzt ist. Außerdem ist aus dem Diagramm die Tatsache zu ersehen, daß ein Schreiben des nachlaufenden magnetpols Mp2 praktisch nicht möglich ist. Der diesem Magnetpol zuzuschreibende Verlauf der Feldstärkekurve zeigt nämlich ein Maximum $H_{max}$, das ganz wesentlich geringer ist als das entsprechende, durch eine gestrichelte Linie dargestellte Schaltfeld ($+H_c$). D.h., für die Speicherschicht 6 des Aufzeichnungsmediums A der erfindungsgemäßen Speichereinrichtung ist ein Material zu wählen, das eine ein entsprechend hohes Schaltfeld ergebende Koerzitivfeldstärke $H_c$ aufweist. Entsprechende Materialien sind allgemein bekannt (vgl. z.B. die genannten EP 0 120 413 oder 0 054 269).

**Ansprüche**

1. Magnetische Speichereinrichtung mit einem auf einem nicht-magnetischen Substrat - schichtweise aufgebauten Dünnfilm-Magnetkopf und mit einem Aufzeichnungsmedium, das mit einer magnetisierbaren Speicherschicht aus einem Material vorbestimmter Koerzitivfeldstärke versehen ist, in welche längs einer Spur Informationen durch senkrechte (vertikale) Magnetisierung dieser Schicht einzuschreiben sind, wobei der Magnetkopf einen den magnetischen Fluß führenden, ringkopfähnlichen magnetischen Leitkörper mit zwei Magnetschenkeln enthält,

-die jeweils mindestens eine magnetische Schicht mit vorbestimmtem magnetischen Verhalten aufweisen,

-deren dem Aufzeichnungsmedium zugewandten Magnetpole in (relativer) Bewegungsrichtung des Kopfes gesehen hintereinander angeordnet sind, wobei ein Spalt vorbestimmter Weite ausgebildet ist,

und

-die außerhalb des Polbereichs einen Zwischenraum begrenzen, durch welchen sich die Windungen einer Schreib-und/oder Lesespulenwicklung erstrecken,

**dadurch gekennzeichnet, daß**

-die mindestens eine Magnetschicht (10a) des in Bewegungsrichtung (v) gesehen nachlaufenden Magnetschenkels (10) zumindest in ihrem den Magnetpol (Mp1) ausbildenden Endbereich (12, 12', 12") hinsichtlich ihres magnetischen Verhaltens - (magnetischer Widerstand $R_{M2}$; Sättigungsmagnetisierung $Ms_2$) verschieden ist gegenüber der mindestens einen Magnetschicht (9a) des vorlaufenden Magnetschenkels (9) zumindest in deren den Magnetpol (Mp2) ausbildenden Endbereich (11)

und

-die Koerzitivfeldstärke $(H_c)$ des Materials der Speicherschicht (6) des Aufzeichnungsmediums - (A) hinreichend hoch gewählt ist,

so daß ein Überschreiben der Speicherschicht (6) des Aufzeichnungsmediums (A) mit dem an dem Magnetpol (Mp2) des nachlaufenden Magnetschenkels (10) hervorzurufenden Magnetfeld zumindest weitgehend ausgeschlossen ist.

2. Speichereinrichtung nach Anspruch 1, **dadurch gekennzeichnet, daß** die Magnetschicht (10a) des nachlaufenden Magnetschenkels (10) zumindest in ihrem den Magnetpol (Mp2) ausbildenden Endbereich (12, 12', 12") einen verhältnismäßig hohen magnetischen Widerstand - $(R_{M2})$ hat und die Magnetschicht (9a) des vorlaufenden Magnetschenkels (9) zumindest in ihrem den Magnetpol (Mp1) ausbildenden Endbereich - (11) einen magnetischen Widerstand $(R_{M1})$ hat, der um ein vorbestimmtes Maß niedriger als der vergleichsweise hohe magnetische Widerstand $(R_{M2})$ der Magnetschicht (10a) des nachlaufenden Magnetschenkels (10) ist.

3. Speichereinrichtung nach Anspruch 2, **dadurch gekennzeichnet, daß** eine Speicherschicht (6) aus einem Material vorgesehen ist, dessen Koerzitivfeldstärke $(H_c)$ einen vorbestimmten Wert hat, so daß die Beziehung gilt:

$$|H_{s2}| \leq 2 \bullet H_c - |H_{s1}|,$$

wobei $H_{s1}$ und $H_{s2}$ die dem Magnetpol (Mp1) des vorlaufenden Magnetschenkels (9 bzw. dem Magnetpol (Mp2) des nachlaufenden Mgnetschenkels (10) zuzuordnenden Scheitelwerte der Vertikalkomponente des mit dem Magnetkopf (2) an der Oberfläche der Speicherschicht (6) erzeugten Magnetfeldes sind.

4. Speichereinrichtung nach Anspruch 2 oder 3, **dadurch gekennzeichnet ,** daß die Magnetschichten (9a, 10a) der Magnetschenkel (9, 10) in ihren die Magnetpole (Mp1, Mp2) ausbildenden Endbereichen (11; 12, 12', 12") magnetische Widerstände $(R_{M1}, R_{M2}$ aufweisen, deren Werte sich mindestens um einen Faktor 2 unterscheiden.

5. Speichereinrichtung nach einem der Ansprüche 2 bis 4, **dadurch gekennzeichnet, daß** die den Magnetpol (Mp2) des nachlaufenden Magnetschenkels (10) ausbildende Magnetschicht - (10a), vorzugsweise an dem von dem Aufzeichnungsmedium (A) abgewandten Ende ihres Endbereiches (12, 12', 12"), eine den magnetischen Widerstand $(R_{M2})$ erhöhende Querschnittsverminderung (Ätzgraben 22) aufweist.

6. Speichereinrichtung nach Anspruch 1, **dadurch gekennzeichnet, daß** der vorlaufende Magnetschenkel (9) zumindest im Bereich (11) seines Magnetpoles (Mp1) aus mindestens einer magnetischen Schicht (9a) aus einem Material vorbestimmter, verhältnismäßig hoher Sättigungsmagnetisierung $(Ms_1)$ besteht und der nachlaufende Magnetschenkel (10) zumindest im Bereich (12) seines Magnetpoles (Mp2) mindestens eine magnetische Schicht (10a) enthält, deren Material eine Sättigungsmagnetisierung $(Ms_2)$ aufweist, die um ein vorbestimmtes Maß niedriger als die vergleichsweise hohe Sättigungsmagnetisierung - $(Ms_1)$ der Magnetschicht (9a) des vorlaufenden Magnetschenkels (9) ist, so daß zumindest der Bereich (12) des Magnetpoles (Mp2) des nachlaufenden Magnetschenkels (10) bei der Schreibfunktion aufgrund eines in der Spulenwicklung (18) fließenden Schreibstromes (I) in die magnetische Sättigung getrieben ist.

7. Speichereinrichtung nach Anspruch 6, **dadurch gekennzeichnet,** daß mindestens einer der Magnetschenkel (9, 10) des Magnetkopfes (2) außer der einen ersten Magnetschicht (9a, 10a) aus dem Material vorbestimmter Sättigungsmagnetisierung (Ms₁, Ms₂) außerhalb des Bereiches (11, 12) seines Magnetpoles (Mp1, Mp2) mindestens eine zusätzliche Magnetschicht - (9b, 10b) aufweist.

8. Speichereinrichtung nach Anspruch 6 oder 7, **dadurch gekennzeichnet ,** daß die den Magnetpol (Mp1) bildende Magnetschicht (9a) des vorlaufenden Magnetschenkels (9) aus einem Material mit einer Sättigungsmagnetisierung (Ms₁) von mindestens 1000 kA/m, vorzugsweise mehr als 1100 kA/m besteht.

9. Speichereinrichtung nach einem der Ansprüche 6 bis 8, **dadurch gekennzeichnet ,** daß die den Magnetpol (Mp2) bildende Magnetschicht - (10a) des nachlaufenden Magnetschenkels (10) aus einem Material mit einer Sättigungsmagnetisierung (Ms₂) von weniger als 900 kA/m, vorzugsweise weniger als 800 kA/m besteht.

10. Speichereinrichtung nach einem der Ansprüche 6 bis 9, **dadurch gekennzeichnet ,** daß die den Magnetpol (Mp1) bildende Magnetschicht - (9a) des vorlaufenden Magnetschenkels (9) aus einem Material mit einer Sättigungsmagnetisierung (Ms₁) besteht, deren Wert mindestens um einen Faktor 1,4 größer ist als der Wert der Sättigungsmagnetisierung (Ms₂) des Materials der den Magnetpol (Mp2) bildenden Magnetschicht - (10a) des nachlaufenden Magnetschenkels (10 ).

11. Speichereinrichtung nach einem der Ansprüche 6 bis 10, **dadurch gekennzeichnet ,** daß die beiden Magnetschenkel ( 9, 10) des Magnetkopfes (24) jeweils eine zusätzliche Magnetschicht (9b bzw. 10b) aus Materialien unterschiedlicher Sättigungsmagnetisierung (Ms₃ bzw. Ms₄) aufweisen, wobei die Sättigungsmagnetisierung (Ms₃) der zusätzlichen Magnetschicht (9b) des vorlaufenden Magnetschenkels (9) größer ist als die Sättigungsmagnetisierung (Ms₄) der zusätzlichen Magnetschicht (10b) des nachlaufenden Magnetschenkels (10).

12. Speichereinrichtung nach einem der Ansprüche 1 bis 11, **dadurch gekennzeichnet ,** daß die Magnetschichten (9a, 10a) der beiden Magnetschenkel (9, 10) zumindest in ihren den jeweiligen Magnetpol (Mp1 bzw. Mp2) ausbildenden Endbereichen (11 bzw. 12, 12', 12") jeweils eine in Bewegungsrichtung (v) zu messende Schichtdicke (d₁ bzw. d₂) aufweisen, die kleiner als 2 µm, insbesondere kleiner als 1 µm, vorzugsweise kleiner als 0,7 µm ist.

13. Speichereinrichtung nach einem der Ansprüche 1 bis 12, **dadurch gekennzeichent ,** daß die Magnetschicht (9a) des vorlaufenden Magnetschenkels (9) zumindest in ihrem den Magnetpol - (Mp1) ausbildenden Endbereich (11) eine in Bewegungsrichtung (v) zu messende Schichtdicke (d₁) aufweist, die größer als die Dicke (d₂) ist, die die Magnetschicht (10a) des nachlaufenden Magnetschenkels (10) zumindest in ihrem den Magnetpol - (Mp2) ausbildenden Endbereich (12, 12', 12") hat.

14. Speichereinrichtung nach einem der Ansprüche 1 bis 13, **dadurch gekennzeichnet ,** daß zumindest einige der Magnetschichten (9a, 9b, 10a, 10b) des magnetischen Leitkörpers (8 ) des Magnetkopfes (2, 24) aus Materialien unterschiedlicher reversibler Permeabilität (μ_{r1}, μ_{r2}) bestehen.

15. Speichereinrichtung nach Anspruch 14, **dadurch gekennzeichnet ,** daß das Material der Magnetschicht (9a) des vorlaufenden Magnetschenkels (9) zumindest in dessen den Magnetpol (Mp1) ausbildenden Endbereich (11) eine größere - (reversible) Permeabilität (μ_{r1}) aufweist als das Material der Magnetschicht (10a) zumindest im entsprechenden Endbereich (12) des nachlaufenden Magnetschenkels (10).

16. Speichereinrichtung nach Anspruch 15, **dadurch gekennzeichnet ,** daß die Werte der verschiedenen (reversiblen) Permeabilitäten (μ_{r1} , μ_{r2}) der beiden Magnetschenkel (9, 10) sich mindestens um einen Faktor 2, vorzugsweise um mindestens einen Faktor 5 unterscheiden.

17. Speichereinrichtung nach Anspruch 15 oder 16, dadurch gekennzeichnet , daß die vergleichsweise größere (reversible) Permeabilität (μ_{r1}) größer als 1000, vorzugsweise größer als 3000 ist.

18. Speichereinrichtung nach einem der Ansprüche 15 bis 17, **dadurch gekennzeichnet ,** daß die vergleichsweise geringere (reversible) Permeabilität (μ_{r2}) einen Wert unter 1000 hat.

19. Speichereinrichtung nach einem der Ansprüche 1 bis 18, **dadurch gekennzeichnet ,** daß die beiden Magnetschenkel (9, 10) des Magnetkopfes (2, 24) jeweils eine zusätzliche Magnetschicht - (9b bzw. 10b) aufweisen.

20. Speichereinrichtung nach einem der Ansprüche 1 bis 19, **dadurch gekennzeichnet ,** daß die Speicherschicht (6) des Aufzeichnungsmediums (A) aus einem Material besteht, dessen Koerzitivfeldstärke (H_c) einen absoluten Wert von mindestens 20 kA/m, vorzugsweise mindestens 60 kA/m hat.

21. Speichereinrichtung nach einem der Ansprüche 1 bis 20, **dadurch gekennzeichnet,** daß die Speicherschicht (6) des Aufzeichnungsmediums (A) auf einer Unterschicht (7) aus einem weichmagnetischen Material angeordnet ist.

22. Speichereinrichtung nach Anspruch 21, **dadurch gekennzeichnet** , daß die Unterschicht (7) aus einer NiFe-Legierung oder aus einer amorphen CoZr-oder CoHf-Legierung besteht.

FIG 1

FIG 2

FIG 3

$|H_{s2}| \leqq 2H_c - H_{s1}$

FIG 4

FIG 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | EP-A-0 135 739 (SIEMENS AG) <br> * Seite 6, Zeile 28 - Seite 7, Zeile 14; Seite 10, Zeile 27 - Seite 11, Zeile 14; Figur 2 * | 1 | G 11 B 5/00 <br> G 11 B 5/31 <br> G 11 B 5/09 |
| A | | 2,21, 22 | |
| | --- | | |
| Y | PATENT ABSTRACTS OF JAPAN, Band 8, Nr. 188 (P-297)[1625], 29. August 1984; & JP-A-59 77 615 (HITACHI SEISAKUSHO K.K.) 04-05-1984 <br> * Insgesamt * | 1 | |
| A | Idem | 2,6,14 ,15 | **RECHERCHIERTE SACHGEBIETE (Int. Cl.4)** |
| | --- | | |
| A | PATENT ABSTRACTS OF JAPAN, Band 9, Nr. 109 (P-355)[1832], 14. Mai 1985; & JP-A-59 231 721 (MATSUSHITA DENKI SANGYO K.K.) 26-12-1984 <br> * Insgesamt * | 1,2,21 | G 11 B |
| | --- | | |
| A | PATENT ABSTRACTS OF JAPAN, Band 9, Nr. 190 (P-378)[1913], 7. August 1985; & JP-A-60 57 512 (HITACHI SEISAKUSHO K.K.) 03-04-1985 <br> * Insgesamt * | 1,6 | |
| | --- -/- | | |

Der vorliegende Recherchenbericht wurde für alle Patentansprüche erstellt.

| Recherchenort <br> DEN HAAG | Abschlußdatum der Recherche <br> 24-03-1987 | Prüfer <br> FUX J. |
|---|---|---|

Europäisches
Patentamt

**EUROPÄISCHER RECHERCHENBERICHT**

Nummer der Anmeldung

EP 86 11 7074

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-2 658 956 (IBM DEUTSCHLAND GmbH) <br> * Seite 8, Zeile 22 - Seite 11, Zeile 9, Zeile 29 - Seite 12, Zeile 19; Ansprüche 1,2,7,10; Figur 1 * | 1,2,8, 20 | |
| A | EP-A-0 071 489 (FUJITSU LTD) <br> * Seite 9, Zeilen 6-23; Figur 7 * | 1,2 | |
| A | PATENT ABSTRACTS OF JAPAN, Band 9, Nr. 109 (P-355)[1832], 14. Mai 1985; & JP-A-59 231 717 (MATSUSHITA DENKI SANGYO K.K.) 26-12-1984 <br> * Insgesamt * | 1,2,21 | |
| A | PATENT ABSTRACTS OF JAPAN, Band 8, Nr. 48 (P-258)[1485], 3. März 1984; & JP-A-58 199 422 (NIPPON DENKI K.K.) 19-11-1983 <br> * Insgesamt * | 1,2,5 | RECHERCHIERTE SACHGEBIETE (Int. Cl.4) |
| A | PATENT ABSTRACTS OF JAPAN, Band 8, Nr. 171 (P-293)[1608], 8. August 1984; & JP-A-59 65 917 (NIPPON DENKI K.K.) 14-04-1984 <br> * Insgesamt * | 1,2,15 ,16 | |

--- -/-

Der vorliegende Recherchenbericht wurde für alle Patentansprüche erstellt.

| Recherchenort <br> DEN HAAG | Abschlußdatum der Recherche <br> 24-03-1987 | Prüfer <br> FUX J. |
|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | PATENT ABSTRACTS OF JAPAN, Band 1, Nr. 145, 25. November 1977, Seite 7380 E 77; & JP-A-52 84 722 (FUJITSU K.K.) 14-07-1977 * Insgesamt * | 1,19 | |
| A | FR-A-2 428 886 (COMPAGNIE INTERNATIONALE POUR L'INFORMATIQUE CII-HONEYWELL BULL) * Seite 7, Zeile 13 - Seite 8, Zeile 27; Seite 10, Zeilen 10-18; Figur 2 * | 1,13, 21,22 | |
| A | GB-A-2 149 186 (CONTROL DATA CORP.) * Seite 1, Zeilen 31-56,117-123; Seite 3, Zeilen 53-91; Figuren 3a,3b * | 1,6 | |
| | | | RECHERCHIERTE SACHGEBIETE (Int. Cl.4) |
| A | PATENT ABSTRACTS OF JAPAN, Band 7, Nr. 188 (P-217)[1333], 17. August 1983; & JP-A-58 88 812 (MATSUSHITA DENKI SANGYO K.K.) 27-05-1983 * Insgesamt * | 1,6,21 | |
| A | PATENT ABSTRACTS OF JAPAN, Band 9, Nr. 190 (P-378)[1913], 7. August 1985; & JP-A-60 57 511 (HITACHI SEISAKUSHO K.K.) 03-04-1985 * Insgesamt * | 1,6,7 | |
| | --- -/- | | |

Der vorliegende Recherchenbericht wurde für alle Patentansprüche erstellt.

| Recherchenort DEN HAAG | Abschlußdatum der Recherche 24-03-1987 | Prüfer FUX J. |
|---|---|---|

## EINSCHLÄGIGE DOKUMENTE

Seite 4

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-3 639 699 (TIEMANN) | | |
| | --- | | |
| E | EP-A-0 166 818 (SIEMENS AG) <br> * Seite 11, Zeilen 8-19; Ansprüche; Figuren * | 1,6 | |
| | ----- | | |
| | | | RECHERCHIERTE SACHGEBIETE (Int. Cl.4) |

Der vorliegende Recherchenbericht wurde für alle Patentansprüche erstellt.

| Recherchenort | Abschlußdatum der Recherche | Prüfer |
|---|---|---|
| DEN HAAG | 24-03-1987 | FUX J. |